# EUROPEAN PATENT APPLICATION

(11) **EP 0 540 788 A1**
(43) Date of publication of application: **12.05.1993**
(21) Application number: 91310182.0
(22) Date of filing: 04.11.1991
(51) Int. Cl.: H01J 61/42, H01J 61/46, H01J 9/22, C03C 17/34, H01J 9/20

(54) **Method for forming double coated layers on a tube, manufacturing a lamp having the double coated layers and a lamp manufactured thereby**

(71) Applicant: TOSHIBA LIGHTING & TECHNOLOGY CORPORATION, Minato-ku, Tokyo-To (JP)
(72) Inventor: Shiraiwa, Kimio, Yokohama-shi, Kanagawa-ken (JP)
(74) Representative: Muir, Ian R.

(57) **Abstract**

A method for forming layers of a metal oxide and a fluorescent material coated on an inner surface of a non-straight glass tube 101, 103 forming a path for a discharge therein. A first mixture made of a water dispersant and metal oxide grains dispersed therein is coated on the inner surface of the tube 101, 103. The metal oxide grains have a smaller average particle size than fluorescent material forming the fluorescent layer 117. The coated first mixture is dried to form a metal oxide layer 115. A fluorescent mixture is then coated over the metal oxide mixture and dried to form the fluorescent layer 117. The two layers 115, 117 are unlikely to come off the wall of the tube of the lamp and the metal oxide layer 115 has a even thickness and a smooth surface.

## Description

The present invention relates to a method of manufacturing a low mercury vapor pressure discharge lamp having double coated layers composed of fluorescent material and metal oxide material, and, in particular, to a method of manufacturing the low mercury vapor pressure discharge lamp having a discharge vessel comprising a plurality of parallel tubular portions and a connecting portion connecting parallel tubular portions with each other in order to form a discharge path in the parallel tubular portions and the connecting portion. The present invention also relates to the lamp manufactured by this method.

In recent years, there has been developed a low mercury vapor pressure discharge lamp having a non-straight glass tube which forms a discharge space and a non-straight discharge path therein. One such lamp is so-called a compact fluorescent lamp. A compact fluorescent lamp is shown in U.S. Patent No. 4,324,447, U.S. Patent No. 4,374,340 and Japanese Patent Laid Open 1-117236. The disclosures of the U.S. Patents are hereby incorporated by reference. This compact fluorescent lamp has a high wall load, and therefore has a low maintenance of luminous flux in its life. In order to improve maintenance, it is generally known to apply a metal oxide layer to a lamp.

There are many known methods for applying a metal oxide layer to a fluorescent lamp. These methods were mainly developed for applying a metal oxide layer to a conventional straight-type fluorescent lamp. For example, the following method is not believed to constitute prior art with respect to the present invention, but is described herein for understanding the background of the present invention.

This method uses two kinds of mixture. The first mixture contains metal oxide grains dispersed in an organic dispersant. This will later be used to form a metal oxide layer. The second mixture contains a fluorescent material dispersed in an organic dispersant. This will later be used to form a fluorescent layer. The first mixture is coated on an inner surface of a glass tube. After this initial coating step, the coated layer is dried. Then, the dried layer is baked to form the metal oxide layer. Next, the second mixture is coated on the metal oxide layer. After the second mixture is coated, the second coated layer is dried and then baked to form the fluorescent layer.

However, double coated layers applied in this manner are likely to come off. This is especially true when the layers are applied to a compact fluorescent lamp which has a plurality of straight tubular portions which are parallel to each other and a connecting tubular portion connecting the straight tubular portions with each other. The double coated layers of such a compact fluorescent lamp are likely to come off at the connecting portion. Accordingly, such a conventional method can not be used in the manufacture of a compact fluorescent lamp requiring double thick layers. The reason why the double coated layers are likely to come off at the connecting portion is considered that the surface of the tube is rough or coarse and the surface of the metal oxide layer is also rough or coarse. It is considered as the reason of the disadvantage that the thickness of the metal oxide layer is not even.

Another problem of the method described above is that there are at least two baking steps required. The glass tube becomes strained and is more likely to deform. The strain and the deformations generate damage to the tube or cause it to crack during later manufacturing steps. Especially, the deformations change the width between both straight tubular portions and therefore, it becomes impossible to attach stems to both straight tubular portions if the deformations are big.

It is an object of the present invention to provide a method for forming double layers which are unlikely to come off the wall of the tube of the low mercury vapor pressure discharge lamp.

It is another object of the present invention to provide a method for forming a metal oxide layer which has a even thickness and whose surface is smooth.

It is third object of the present invention to provide a method for decreasing strains and deformations of the glass tube during forming double layers.

To accomplish the objects described above, the present invention provides a method for forming double layers (metal oxide layer and a fluorescent layer) coated on an inner surface of a non-straight glass tube forming a discharge path, comprising:
coating a first mixture made of a water dispersant and metal oxide grains dispersed in the water dispersant on the inner surface of the tube, the metal oxide grains having a smaller average particle size than fluorescent material forming the fluorescent layer;
drying the first mixture coated on the tube so as to form the metal oxide layer made of the metal oxide grains;
coating a second mixture made of a second dispersant and the fluorescent material dispersed in the second dispersant on the fluorescent layer; and
drying the second mixture coated on the metal oxide layer so as to form the fluorescent layer made of the fluorescent material.

It is a further object of the invention to provide lamps manufactured in accordance with this method.

The present invention will be better understood with reference to accompanying drawings, wherein some reference numerals throughout the various figures denote similar structural elements and in which:
FIG.1 is a cross sectional view of a low mercury vapor pressure discharge lamp produced by a method regarding the first embodiment of the present invention;
FIG.2 is a sectional view of a pair of straight tubes having collars used for making a lamp of FIG.1;
FIG.3 is a perspective view of the tube under a step for making collars used for making a lamp of FIG.1;
FIG.4 is a sectional view of the tube after connecting the tubes of FIG.2;
FIG.5 is a sectional view of the tube after coating metal oxide layer on the inner surface of the tube of FIG.4;
FIG.6 is a sectional view of the tube after providing clear areas to the tube of FIG.5;
FIG.7 is a sectional view of the tube after coating fluorescent layer on the metal oxide layer of the tube of FIG.6;
FIG.8 is a sectional view of the tube after providing clear areas to the tube of FIG.7;
FIG.9 is a sectional view of the tube after closing a pair of openings of the tube of FIG.8 near a connecting tubular portion;
FIG.10 is a partial sectional view of the metal oxide layer of the tube of FIG.5 at the position P;
FIG.11 is a partial sectional view of the metal oxide layer of the tube of FIG.5 at the position Q;
FIG.12 is a partial sectional view of the metal oxide layer of the tube of FIG.5 at the position R;
FIG.13 is a partial sectional view of the metal oxide layer of the tube of FIG.5 at the position S;
FIG.14 is a partial sectional view of the metal oxide layer of the tube of the conventional lamp corresponding to FIG.5 at the position P;
FIG.15 is a partial sectional view of the metal oxide layer of the tube of the conventional lamp corresponding to FIG.5 at the position Q;
FIG.16 is a partial sectional view of the metal oxide layer of the tube of the conventional lamp corresponding to FIG.5 at the position R;
FIG.17 is a partial sectional view of the metal oxide layer of the tube of the conventional lamp corresponding to FIG.5 at the position S;
FIG.18 is a cross sectional view of another low mercury vapor pressure discharge lamp produced by a method regarding the second embodiment of the present invention;
FIG.19 is a sectional view of the tube after coating metal oxide layer on the inner surface of the tube used for making the lamp of FIG.18;
FIG.20 is a sectional view of the tube after providing clear areas to the tube of FIG.19;
FIG.21 is a sectional view of the tube after coating fluorescent layer on the metal oxide layer of the tube of FIG.20;
FIG.22 is a sectional view of the tube after providing clear areas to the tube of FIG.21;
FIG.23 is a cross sectional view of third low mercury vapor pressure discharge lamp produced by a method regarding the third embodiment of the present invention;
FIG.24 is a sectional view of the tube after providing an additional clear area to the tube of FIG.9 for producing the lamp of FIG.23;
FIG.25 is a sectional view of the tube after closing a pair of openings of the tube of FIG.24;
FIG.26 is a sectional view of a pair of tubes before connecting the tubes of FIG.25;
FIG.27 is a sectional view of a U-shape tube used for making another type of lamp produced by a method of the present invention.;
FIG.28 is a sectional view of the tube after coating metal oxide layer on the inner surface of the tube of FIG.27;
FIG.29 is a sectional view of the tube after providing clear areas to the tube of FIG.28;
FIG.30 is a sectional view of the tube after coating fluorescent layer on the metal oxide layer of the tube of FIG.29;
FIG.31 is a sectional view of the tube after providing clear areas to the tube of FIG.30;
FIG.32 is a sectional view of the tube after closing a pair of openings of the tube of FIG.31; and
FIG.33 is a sectional view of the tube having a bent portion where a cross section is not circular.

Preferred embodiments of the present invention will now be described in more detail with reference to the accompanying drawings.

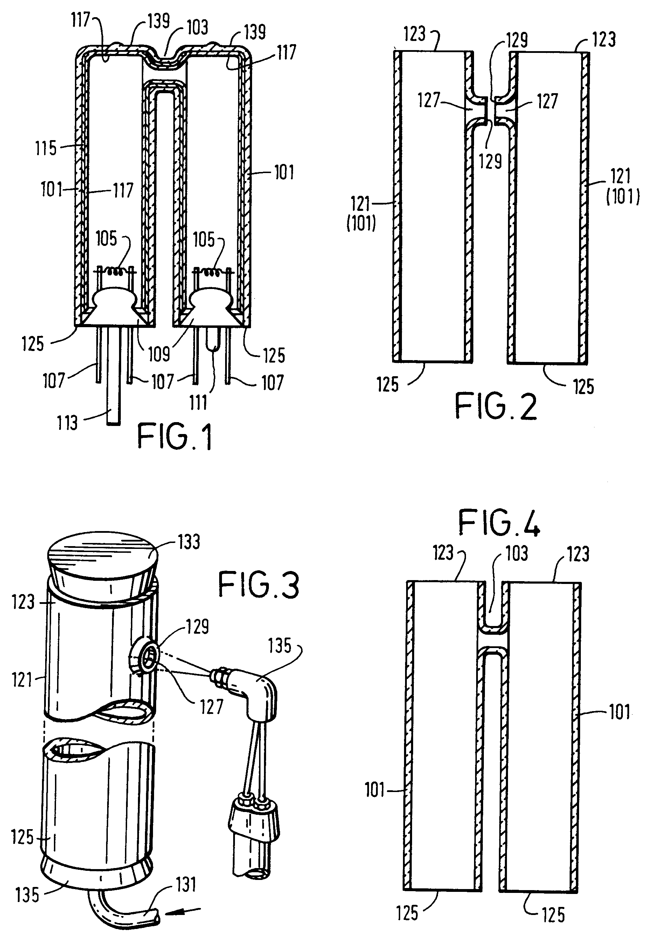

FIG.1 to FIG.13 illustrate the first embodiment of the present invention relating to a method for forming double coated layers of a low mercury vapor pressure discharge lamp, especially a compact fluorescent lamp. FIG.1 is a sectional view of the compact fluorescent lamp produced by the first embodiment. The lamp has a tube which is composed of two parallel straight tubular portions 101, 101 connected by one connecting tubular portion 103. The connecting tubular portion 103 has a smaller diameter than the straight tubular portions 101 and 101. Accordingly, two straight tubular portions 101 and the connecting tubular portion 103 form a discharge space and a single U-shaped discharge path therethrough. The lamp has a pair of electrodes 105 at both ends of the discharge path. The electrodes 105 are supported by lead wires 107 penetrating through stems 109. The stems 109 have exhaust tubes 111 and 113. The exhaust tube 111 is shown in FIGURE 1 after it has been cut-off. Exhaust tube 113 is illustrated in FIGURE 1 before being cut-off.

The lamp has double layers composed of a metal oxide layer 115 and a fluorescent layer 117, coated on an inner surface of the glass tube. The metal oxide layer 115 is provided for improving the maintenance of luminous flux of the lamp and is made of metal oxide grains such as τ-aluminum oxide grains having an average particle size of less than 1 µm. The average particle size of the τ-aluminum oxide grains is usually about 0.1 µm. The fluorescent layer 117 is made of a three-band fluorescent material which is mixed with three different kind of phosphors. One is the phosphor represented by the formula "(Ba,Mg)0.8Al₂O₃:Eu²⁺", which emits blue light having a spectrum peak of approx. 435 nm in wavelength. The second is the phosphor represented by the formula "LaPO₄:Ce,Tb", which emits green light having a spectrum peak of approx. 540 nm in wavelength. The third is the phosphor represented by the formula "Y₃O:Eu³⁺", which emits red light having a spectrum peak of approx. 610 nm in wavelength. Each phosphor has an average particle size of about 3 to 5 µm in diameter. The blue light, the green light and the red light are mixed and become to white light.

The lamp described above is manufactured by the following steps. First, a pair of straight glass tubes 121 having openings 123 and 125 at respective ends are prepared. Second, there is formed a side opening and a collar 129 at a side portion of each straight glass tube 121, as shown in FIG.2, by introducing pressurized air into the tube 121 through an air tube 131 while the both openings 123 and 125 are closed with rubber caps 133 and soon after the side portion of the tube 121 is heated and softened by a burner 135, as shown in FIG.3. During a next step, the pair of straight glass tubes 121 are positioned parallel to one another and the side openings are attached to one another, as shown in FIG.2, soon after each collar 127 is formed and while each collar 127 is soft. As a result, the pair of collars 127 are connected with one another to form a connecting tubular portion 103 and therefore, a single path is formed in the tube through the connecting tubular portion 103 and the pair of the straight tubular portions 101, as shown in FIG.3.

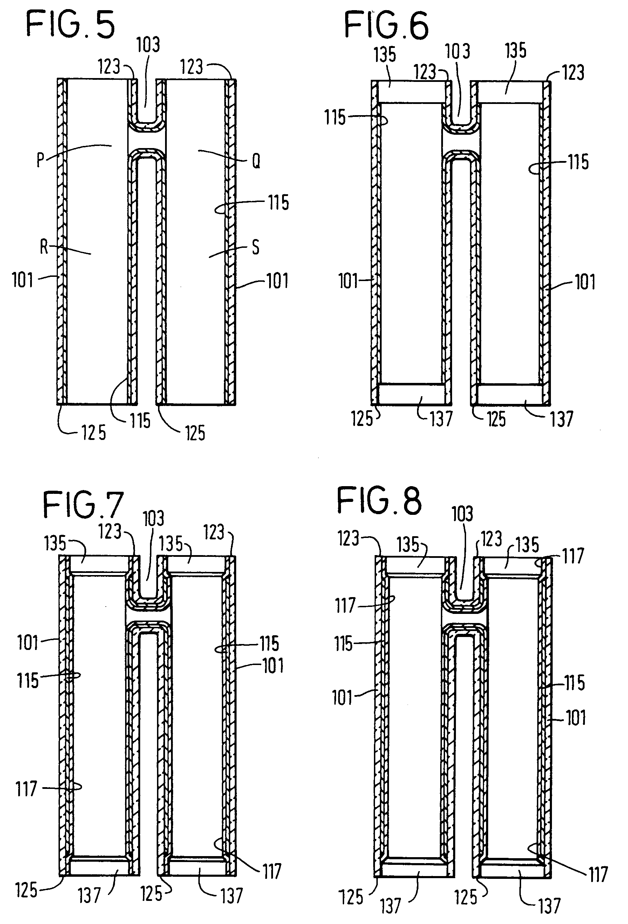

Next, steps are carried out for forming the metal oxide layer 115 and the fluorescent layer 117. As shown in FIG.5, steps for introducing a mixture containing τ-aluminum oxide grains dispersed in pure water into the tube through the openings 123 and for coating the mixture on the inner surface of the glass tube having the connecting tubular portion 103 and the pair of the straight tubular portions 101 are accomplished while the tube is supported in a position that the straight portions are parallel to the direction of the gravity. The excess mixture introduced into the tube flows and is exhausted through the openings 125. The weight ratio of the τ-aluminum oxide grains among the mixture is 4 wt%. After coating the mixture, it is dried while the tube is in the same position as it was during the coating step. Hot air of about 50 °C is allowed to flow through the straight tubular portions 101 in order to promote fast drying. According to the steps described above, the coated metal oxide layer 115 is formed so as to be 0.7 - 0.8 µm in thickness near the positions P and Q and to be 0.7 - 1.0 µm.

After drying, the coated metal oxide layer 115 is eliminated near openings 123 and 125 for making clear areas 135 and 137 which are not covered with the metal oxide layer 115, as shown in FIG.6. Areas 135 and 137 are cleared so that openings 123 can later be closed and stems 109 can be attached at the openings 125. If there is no clear area, it is impossible to close the openings 123 later and attach the stems 109 at the openings 125.

Next, the fluorescent layer 117 is formed. The steps for forming the fluorescent layer are similar to those carried out for forming the metal oxide layer 115. As shown in FIG.7, a second mixture containing fluorescent material dispersed in organic dispersant such as butyle acetate is introduced into the tube through the openings 123. The second mixture is coated onto the metal oxide layer while the tube is supported in the same position as during the steps for forming the metal oxide layer 115. The second mixture also contains other elements such as nitratecellulose working as a sticky agent. The excess mixture introduced into the tube flows and is exhausted through the openings 125 in the same manner as in the steps for coating the metal oxide layer 115. After coating, the mixture, is dried while the tube is in the same position as during the coating step. After drying, the fluorescent layer 117 is eliminated near openings 125 for making clear areas 137 which are not covered with the fluorescent layer 117 in the same manner as the metal oxide layer 115 was cleared. The clear areas 137 are formed for the same reasons that the metal oxide layer 115 was cleared. But it is possible to close the openings 125, even if there is the fluorescent material 115 at the clear areas 135. When the clear areas 137 are made, the fluorescent layer 117 covers the ends of the metal oxide layer 115, as shown in FIG.8.

After clearing areas 137, the double layer composed of the metal oxide layer 115 and the fluorescent layer 117 are baked at about 550 °C in order to eliminate organic elements and impure elements.

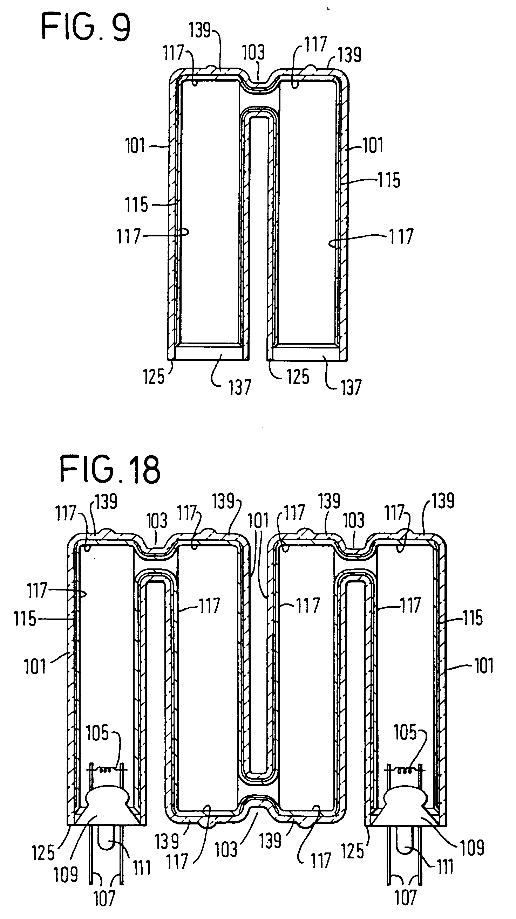

Next, the openings 123 which are close to the connecting tubular portion 103 are closed or sealed. To accomplish this, the straight tabular portions are heated and softened around boundaries between the clear areas 135 and the double layers 115 and 117. Then both ends of each straight tabular portion are drawn. The softened portions are extended and become thin in diameter. When both ends of each straight portions are drawn more, the clear areas 135 are cut off from the portions coated with the double layers 115 and 117. At the same time, the boundaries of the portions coated with the double layers 115 and 117 are necessarily sealed. At the same time, the glass tube and the fluorescent material are extended near the sealed ends 139, and thus the inner surfaces of the sealed ends 139 are covered with the fluorescent material, as shown in FIG.9.

After making sealed ends 139, the other openings 123 are sealed with the pair of stems 109 having the electrodes 105 and the exhaust tubes 111 and 113, as shown in FIG.1. In FIG.1, the exhaust tube 111 is shown at a point in time after cutting off a long exhaust tube and the exhaust tube 113 is shown at a point in time before the cut-off process, which is described above.

Finally, air is exhausted from the inner space, i.e. a discharge space through the exhaust tube 113 and a discharge gas comprising a certain amount of mercury and a rare gas such as argon is introduced into the discharge space through the exhaust tube 113. Then, the top end of the exhaust tube 113 is cut off to a short length like that of exhaust tube 111. According to these steps, the lamp is manufactured.

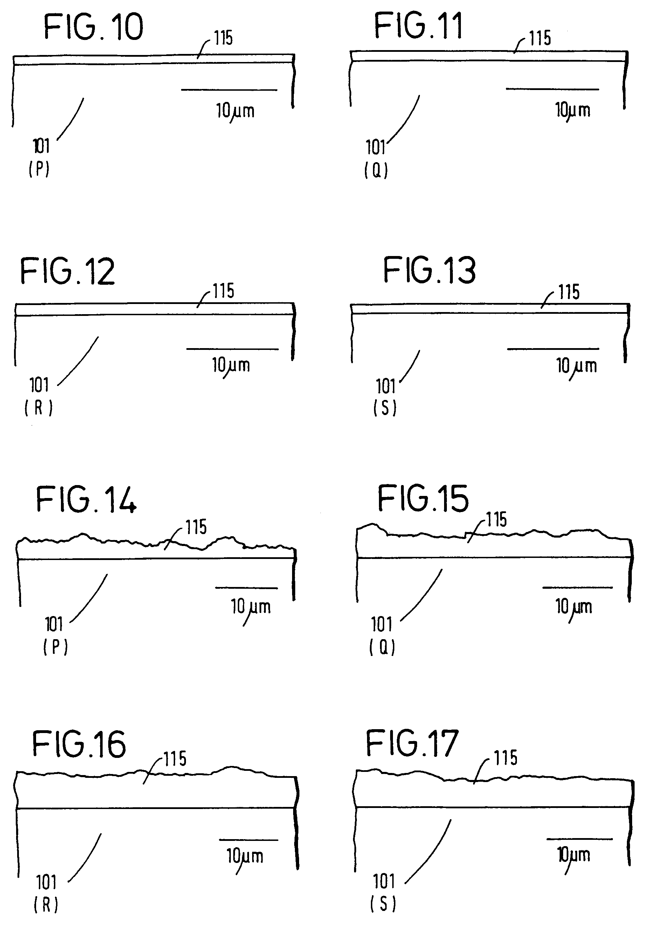

A lamp manufactured according to the method described above has an advantage in that the thickness of the metal oxide layer 115 is more even than that of the conventional lamp. For example, FIG.10 - FIG.13 are sectional views of the metal oxide layer 115 of the lamp of the first embodiment. THey are the figures corresponding to the positions P, Q, R and S described in FIG.5, respectively. These figures are described by tracing photographs of the metal oxide layer 115. On the other hand, FIG.14 - FIG.17 are sectional views of the conventional metal oxide layer formed by using an organic dispersant dispersing metal oxide grains. They corresponds to FIG.10 - FIG.13, respectively. These figures are also described by tracing photograpies of the conventional metal oxide layer. According to compare FIG.10 - FIG.13 with FIG.14 - FIG.17, it is understandable that the present invention has an advantage in that the thickness of the metal oxide layer 115 is more even than that of the conventional lamp and that the surface of the metal oxide layer 115 is flatter than that of the conventional metal oxide layer.

Because the conventional metal oxide layer uses an organic dispersant dispersing metal oxide grains in the step for coating the first mixture, gas is generated from the metal oxide layer in the step for baking the metal oxide layer and the gas make the layer uneven in thickness and rough in surface. It is thought that this is the reason why the thickness of the metal oxide layer 115 of the present invention is more even than that of the conventional lamp and why the surface of the metal oxide layer 115 is flatter than that of the conventional metal oxide layer.

This is important for a connecting tubular portion. The connecting tubular portion is sometimes thinner than straight portions and sometimes non-circular in cross section. It is difficult to form double layers having a flat and smooth surface and such that the layers have an even thickness.

Further, the fluorescent layer 117 is strongly attached to the surface of the metal oxide layer 115 because the surface of the metal oxide layer 115 of the present invention is flat and therefore, fluorescent material does not easily come off even if it is at the connecting tubular portion 103, as compared with the conventional method using an organic dispersant for metal oxide grains.

Furthermore, the glass tube is less strained and deformations of the tube become small, as compared with the conventional method having two baking steps, because there is only one baking step in the above embodiment. Therefore, there is less damage and cracking of the tube at the later manufacturing steps of the present embodiment than the conventional method.

This is important especially for this kind of compact fluorescent lamps. The deformations and cracks happen around the connecting portions and therefore, if lamps do not have connecting portions, it may be possible to bake the double layers twice. If lamps do not have connecting portions, most deformations and cracks are not caused. Accordingly, it is important, especially for this kind of lamps having a connecting portion, to bake the double layers only once.

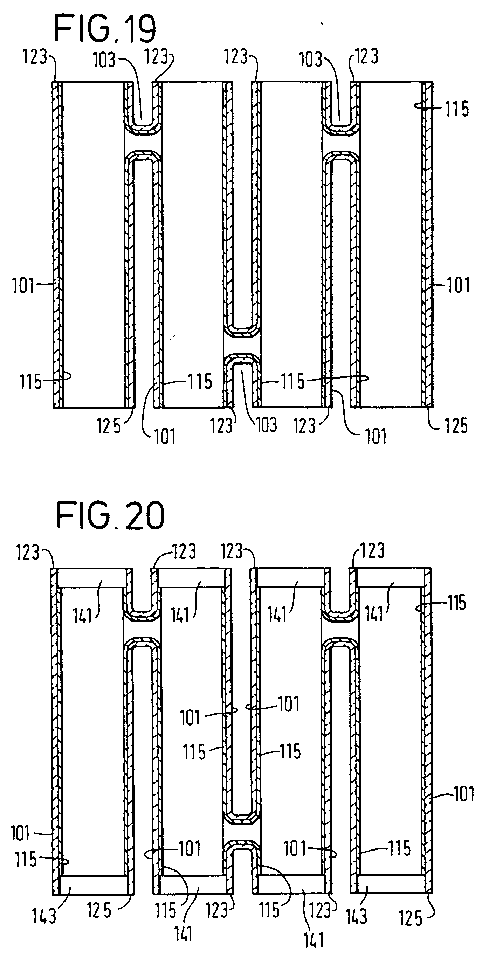

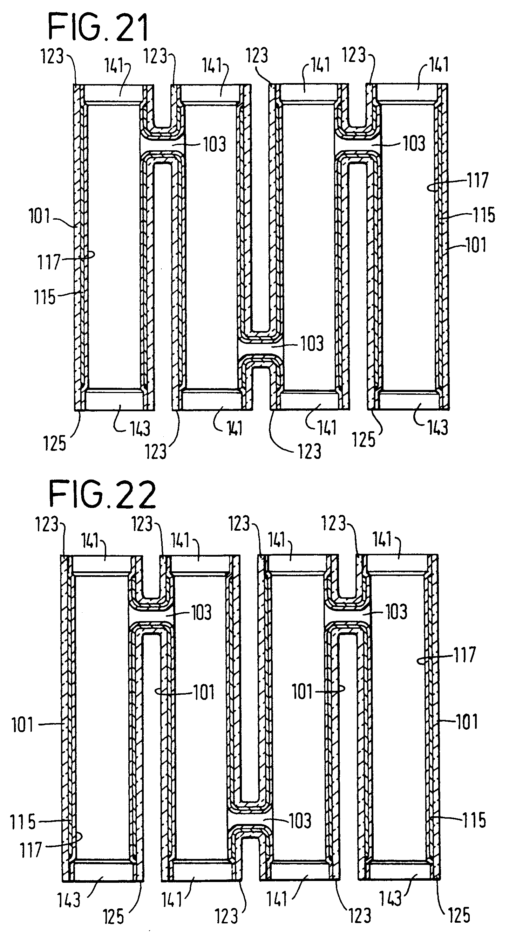

FIG.18 to FIG.22 illustrate a second embodiment of the present invention directed to a method for forming double coated layers of a low mercury vapor pressure discharge lamp which is another kind of compact fluorescent lamps. FIG.22 is a sectional view of the compact fluorescent lamp produced by the second embodiment. The lamp has a tube which is composed of four straight tubular portions 101 and three connecting tubular portions 103. The number of the straight tubular portions and connecting tubular portions is a main difference between the first and second embodiments. Other elements of the lamp produced by the method of the second embodiment are almost same as that of the first embodiment. The connecting tubular portions 103 are thinner than the straight tubular portions 101 in diameter as same as in the first embodiment. These straight tubular portions 101 are parallel to each other and are connected with the connecting tubular portions 103 and therefore, two straight tubular portions 101 and the connecting tubular portions 103 form a discharge space and a single discharge path therethrough as same as in the first embodiment. The discharge path is convoluted. The lamp has a pair of electrodes 105 at both ends of the discharge path. The electrodes 105 are supported by lead wires 107 penetrating through stems 109. The stems 109 have exhaust tubes 111 and 113. These are the same as in the first embodiment. The exhaust tubes 111 and 113 are illustrated with a figure after cut-off process for cutting off long exhaust tubes.

The lamp has double layers composed of a metal oxide layer 115 and a fluorescent layer 117, coated on an inner surface of the glass tube, as same as the first embodiment.

The lamp manufactured by the method of the second embodiment described above is manufactured by almost the same steps as those of the first embodiment. First, four straight tubes are connected for making a tube having four straight tubular portions 101 and three connecting tubular portions 103, as shown in FIG.19. Each straight tubular portion 103 has openings 123 and 125 at respective ends thereof. Next, a first mixture containing metal oxide grains is introduced into the tube through the openings 123 and is coated on the inner surface of the tube in order to form the metal oxide layer 115 as same as the first embodiment. After drying the metal oxide layer, it is eliminated near the openings 123 and 125 to form clear areas 141 and 143 for attaching the stems 109 to the openings 125 or for closing the openings 123, as in the first embodiment, as shown in FIG.20. Next, the fluorescent layer 117 is formed on the metal oxide layer 115 in the same way as the metal oxide layer 115, and also as in the first embodiment, as shown in FIG.21 and 22. As the clear areas 141 and 143 are formed in the same manner as the tube of FIG.8 of the first embodiment, the clear areas 141 have the fluorescent layer 117 and the clear areas 143 and 143 do not have the fluorescent layer 117. Then, the double layers are baked for the same purpose as in the first embodiment. After forming the double layers 115 and 117, stems 109 are attached to close the openings 123 and 125. Then air is exhausted from the discharge space and a discharge gas is introduced into the discharge space. And then, the top end of the exhaust tube is cut off in a short length, as shown in FIG.18. According to these steps, the lamp is manufactured.

The second embodiment described above has the same advantages as the first embodiment because the first mixture uses a water dispersant as in the first embodiment. Namely, the lamp manufactured by the method of the second embodiment described above has the advantage in that the thickness of the metal oxide layer 115 is more even than that of the conventional lamp, the surface of the metal oxide layer 115 is flatter than that of the conventional lamp and the fluorescent layer 117 is strongly attached to the surface of the metal oxide layer 115. The second embodiment has also the same advantages as the first embodiment in that the glass tube is less strained and deformations of the tube become small, since the second embodiment has one baking step.

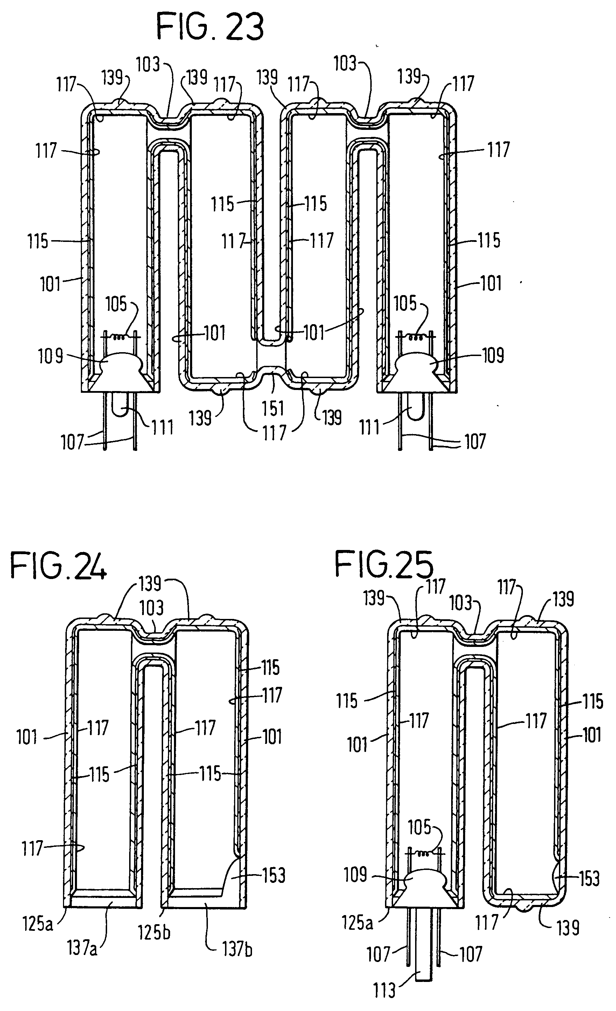

A similar lamp to that produced by the method of second embodiment can be made by another method as follows. FIG.23, 24, 25 and 26 illustrate another method of manufacture constituting a third embodiment of the invention. FIG.23 shows the fluorescent lamp produced by the method of the third embodiment. A difference between the lamp of FIG.23 (third embodiment) and the lamp of FIG.18 (second embodiment) is that the connecting portion 151 at the center of the tube of the FIG.23 does not have double layers. The difference is caused by the difference between the manufacturing method for the fluorescent lamps.

At first, a pair of tubes having a U-shape path shown in FIG.24 which are similar to the tube of FIG.9. are prepared. The U-shape path tube has a metal oxide layer 115 and a fluorescent layer 117 on the surface of the tube (same as the tube of FIG.9). The metal oxide layer 115 and the fluorescent layer 117 are formed in almost the same way as the first embodiment. The difference between the tube of FIG.24 and the tube of FIG.9 is that the tube of FIG.24 has clear area 153 in addition to the same clear areas 135, 137a and 137b as that of FIG.9. The additional clear area 153 is made at the same time that clear areas 135, 137a and 137b are formed and in the same manner. The first mixture containing metal oxide grains uses a water dispersant and there is only a single baking step, as in the first embodiment.

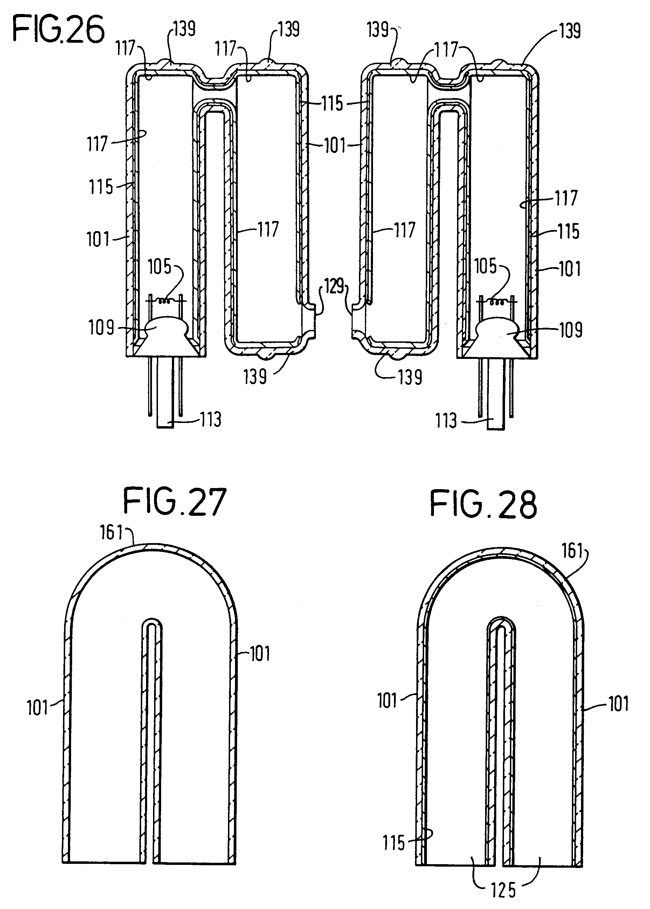

Next, as shown in FIG.25, a stem 109 is attached to the opening 125a. Opening 125b, which has the additional clear area 153, is closed so as to form a sealed end 139. Next, there is formed a collar at clear area 153 in the same that collar 129 of FIG.3 is formed. At this time, the pressured gas is introduced through an exhaust tube 113. A pair of tubes having collar 129 made in such manner are prepared, as shown in FIG.26. Soon after the collar 129 is formed and while the collar 129 is heated and softened, the pair of tubes having U-shaped path are connected with one another by connecting the collars 129 with one another, in a similar manner to the forming of connecting portions 103. As the connecting portion 151 contains neither metal oxide grain nor fluorescent material, it is easy to make the connecting portion 151. Of course, it is possible to connect the pair of tubes having the fluorescent layer at the connecting portion, but it is more difficult to connect the pair of tubes and form the connecting portion.

Then air is exhausted from the discharge space and a discharge gas is introduced into the discharge space, through the exhausted tube 113. Then, the top end of the exhaust tube 113 is cut off in a short length, as shown in FIG.23.

The third embodiment described above has the same advantages as those produced by the first and second produces tubes having embodiments, because the first mixture uses water dispersant. Namely, the lamp produced by the method of the third embodiment has a metal oxide layer 115 thickness that is more even than that of the conventional lamp. The surface of the metal oxide layer 115 is flatter than that of the conventional metal oxide layer and that the fluorescent layer 117 is strongly attached to the surface of the metal oxide layer 115. The third embodiment has also the same advantages as the first and second embodiments in that the glass tube is less strained and there are fewer deformations of the tube because there is only one baking step.

Further, the present invention is not limited to the above embodiment, the present invention can be applied to a bended tube that is shown in FIG.27. In this case, a bent portion 161 corresponds to the connecting tubular portions 103 of the first, second and third embodiments. The inner surface of bent portion 161 is more rough than the other portions, for example, inner surfaces of straight portions 101. Accordingly, double coated layers are likely to come out from the inner surface of the bent portion 161. Therefore, when the present invention is applied to the tube having the bent portion 161, the same effects as another embodiment are obtained.

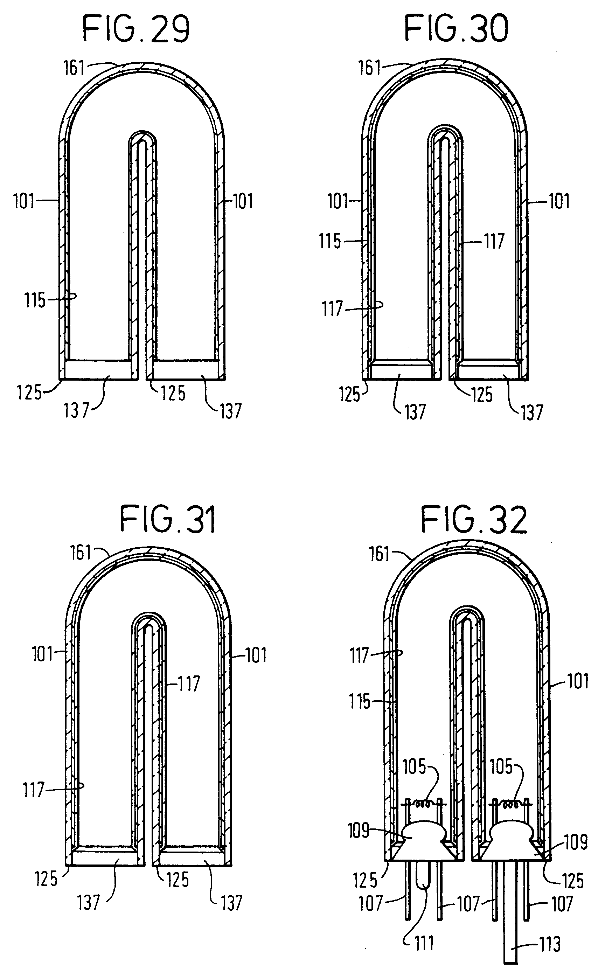

At first a mixture having metal oxide grains dispersed in water dispersant, as in the other embodiments, is coated on the inner surfaces of the tube and dried, as shown in FIG.28. Next, the coated metal oxide layer 115 is eliminated from the areas near both ends of the tube to from clear areas 137 and 137, as shown in FIG.29. Then, a fluorescent layer 117 is coated and the coated fluorescent layer is eliminated from the areas near both ends of the tube to again form clear areas 137, as shown in FIG.30 and 31. Then, the tube is baked, as in the other embodiments and a pair of stems 109 are attached to the openings 125. Air is exhausted from the discharge space and a discharge gas is introduced into the discharge space, through the exhausted tube 113. Then, the top end of the exhaust tube 113 is cut off to a short length, as shown in FIG.32.

This embodiment has the same advantages as the previously described embodiments. The thickness of the metal oxide layer 115 is more even than that of the conventional lamp. The surface of the metal oxide layer 115 is flatter than that of the conventional metal oxide layer and the fluorescent layer 117 is strongly attached to the surface of the metal oxide layer 115, because the first mixture uses water dispersant as same as the other embodiments. This embodiment has also the some advantages as the other embodiments in that the glass tube is less strained and deformations of the tube become small.

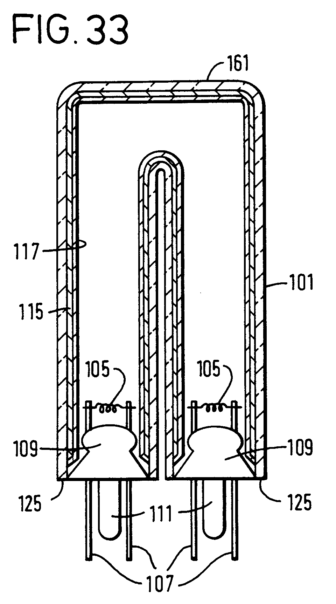

The present invention is not limited to the embodiments described above. For example, the present invention may be applied to a lamp shown in FIG.33. This lamp has a similar bent portion 161 to that of the lamp of FIG.32. The bent portion 161 of FIG.33 is not round but is square a little. The bent portion has a non-circular cross section where it is difficult to form double coated layers having a smooth surface and an even thickness.

The present invention may be applied to lamps not having a connecting portion. In this case, the double layers may be baked twice and a dispersant for a second mixture containing fluorescent material may be water. The second dispersant is not limited to be organic. Further, metal oxide grains are not limited to τ-structural aluminum oxide grains having an average particle size of less than 1 µm. It may be, for example, other kinds of metal oxide such as TiO₂, MgO and so on. And clean areas are formed by eliminating or removing each layer respectively in two steps in the embodiments described above, but they may be formed by eliminating or removing double layers in one step at the same time.

## Claims

1. A method for coating a metal oxide layer 115 and a fluorescent layer 117 on an inner surface of a non-straight glass tube 101,103 for providing a discharge path therein, comprising the steps of:
coating a first mixture made of a water dispersant and metal oxide grains dispersed therein on the inner surface, the metal oxide grains having a smaller average particle size than those of fluorescent material that are used to form the fluorescent layer 117;
drying the first mixture coated on the tube so as to form the metal oxide layer 115;
coating a second mixture made of a second dispersant and the fluorescent material dispersed therein on the metal oxide layer 115; and
drying the second mixture coated on said metal oxide layer 115 so as to form the fluorescent layer 117.

2. The method according to claim 1, wherein the metal oxide grains have an average particle size of less than 1 µm.

3. The method according to claim 1, wherein the second dispersant is organic.

4. The method according to claim 1, further comprising the step of baking both the metal oxide layer 115 and the fluorescent layer 117 at the same time after drying the second mixture.

5. A method for manufacturing a low mercury vapor pressure discharge lamp comprising a non-straight glass tube 101,103 which forms a discharge space and a non-straight discharge path therein, a discharge gas filled in said tube 101,103, a pair of electrodes 105 provided in said tube 101,103 and double layers 115,119 composed of a metal oxide layer 115 and a fluorescent layer 117 coated on an inner surface of said tube 101,103, the method comprising the steps of:
coating a first mixture made of a water dispersant and metal oxide grains dispersed therein on the inner surface, the metal oxide grains having a smaller average particle size than those of fluorescent material that are used to form the fluorescent layer 117;
drying the first mixture coated on the tube 101,103 so as to form the metal oxide layer 115;
coating a second mixture made of a second dispersant and said fluorescent material dispersed therein on the metal oxide layer 115;
drying the second mixture coated on said metal oxide layer 115 so as to form the fluorescent layer 117 made of said fluorescent material;
providing the pair of electrodes 105 in the tube 101,103; and
introducing the discharge gas in said tube 101,103.

6. A method for manufacturing a low mercury vapor pressure discharge lamp comprising a non-straight glass tube 101,103 Which forms a discharge space and a non-straight discharge path therein, a discharge gas filled in said tube 101,103, a pair of electrodes 105 provided in said tube 101,103 and double layers 115,119 composed of a metal oxide layer 115 and a fluorescent layer 119 coated on an inner surface of said tube 101,103, the method comprising the steps of:
preparing a plurality of glass tube elements 101,103, each element 101,103 having a plurality of straight tubular portion 101 which are parallel to each other and a connecting tubular portion 103 connecting the straight tubular portions 101 with each other and forming a discharge path through the straight tubular portions 101 and the connecting tubular portion 103;
coating a first mixture made of a water dispersant and metal oxide grains dispersed therein on an inner surface of each element 101,103, the metal oxide grains having a smaller average particle size than those of fluorescent material that are used to form the fluorescent layer 117;
drying the first mixture coated on each element 101,103 so as to form the metal oxide layer 115;
coating a second mixture made of a second dispersant and the fluorescent material dispersed therein on the metal oxide layer 115 of each element 101,103;
drying the second mixture coated on said metal oxide layer 115 of each element 101,103 so as to form the fluorescent layer 117;
connecting the elements 101,103 having the metal oxide layer 115 and the fluorescent layer 117 with each other so as to connect each discharge path of each element 101,103 with each other and to form said tube 101,103;
providing the pair of electrodes 105 in the tube 101,103; and
introducing the discharge gas in the tube.

7. A low mercury vapor pressure discharge lamp comprising a non-straight glass tube 101,103 which forms a discharge space and a non-straight discharge path therein, a discharge gas filled in said tube 101,103, a pair of electrodes 105 provided in said tube 101,103 and double layers 115,117 composed of a metal oxide layer 115 and a fluorescent layer 117 coated on an inner surface of said tube 101,103, manufactured by a process comprising the steps of:
coating a first mixture made of a water dispersant and metal oxide grains dispersed therein on the inner surface, said metal oxide grains having a smaller average particle size than those of fluorescent material that are used to form the fluorescent layer 117;
drying the first mixture coated on said tube 101,103 so as to form the metal oxide layer 115;
coating a second mixture made of a second dispersant and the fluorescent material dispersed therein on the metal oxide layer 115;
drying the second mixture coated on said metal oxide layer 115 so as to form the fluorescent layer 117;
providing the pair of electrodes in said tube 101,103; and
introducing the discharge gas in said tube 101,103.

8. The low mercury vapor pressure discharge lamp according to claim 7, wherein the tube 101,103 has a plurality of straight tubular portions 101 which are parallel to each other and a connecting tubular portion 103 connecting said straight tubular portions 101 with each other and forms said path through the straight tubular portions 101 and the connecting tubular portion 103.

9. The low mercury vapor discharge lamp according to claim 8, wherein the connecting tubular portion 103 has a non-circular cross section.

10. The low mercury vapor discharge lamp according to claim 8, wherein the connecting tubular portion 103 has a smaller diameter in cross section than said straight tubular portions 101.
